Europäisches Patentamt

European Patent Office

Office européen des brevets

(11) Veröffentlichungsnummer: **0 084 091**

**A1**

(12) # EUROPÄISCHE PATENTANMELDUNG

(21) Anmeldenummer: **82110336.3**

(22) Anmeldetag: **10.11.82**

(51) Int. Cl.³: **F 02 B 37/00**

(30) Priorität: **16.01.82 DE 3201246**

(43) Veröffentlichungstag der Anmeldung:
**27.07.83** Patentblatt **83/30**

(84) Benannte Vertragsstaaten:
**AT DE FR GB IT**

(71) Anmelder: **Klöckner-Humboldt-Deutz
Aktiengesellschaft
Deutz-Mülheimer-Strasse 111 Postfach 80 05 09
D-5000 Köln 80(DE)**

(72) Erfinder: **Tholen, Paul, Dipl.-Ing.
Im Lüh 19
D-5060 Berg. Gladbach(DE)**

(72) Erfinder: **Esche, Dieter, Dipl.-Ing.
Schmittgasse 91
D-5000 Köln 90(DE)**

(72) Erfinder: **Lichtblau, Leo, Dipl.-Ing.
Alte Heide 28
D-5000 Köln 90(DE)**

(54) **Brennkraftmaschine mit einem Abgasturbolader.**

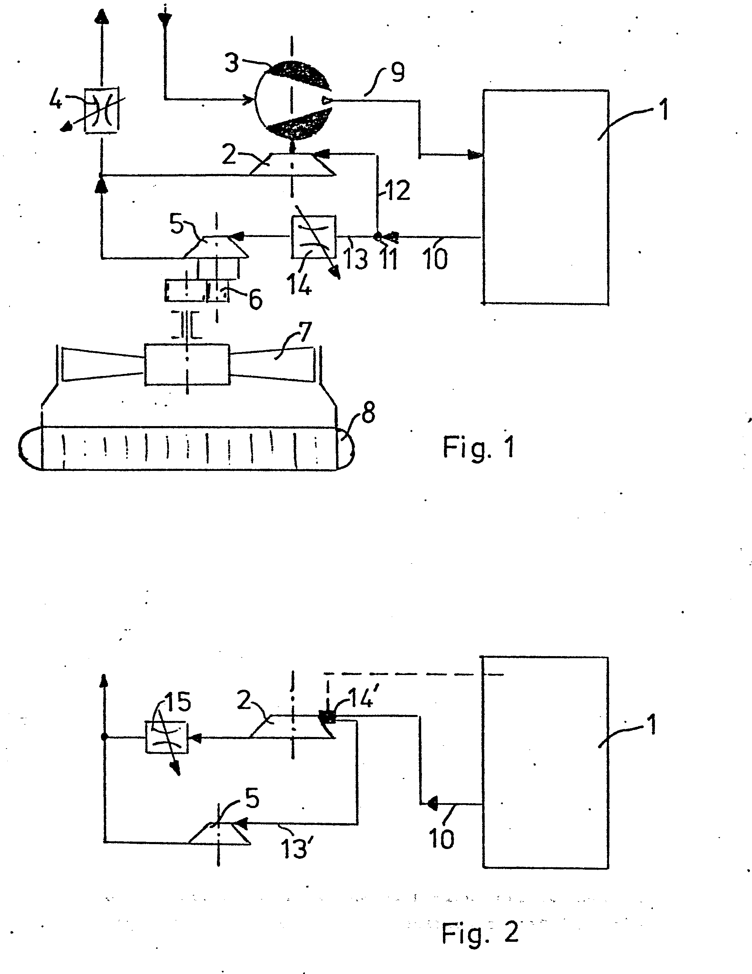

(57) Die Erfindung bezieht sich auf eine mittels Abgasturbolader 2, 3 aufgeladene Brennkraftmaschine 1, deren Kühlgebläse 7 von einer weiteren Abgasturbine 5 angetrieben wird. Beide Abgasturbinen 2, 5 sind parallel geschaltet. Die Regelung des Abgasstromes wird von einem Regelventil 14, 14' übernommen (Fig. 1).

Fig. 1

EP 0 084 091 A1

Klöckner-Humboldt-Deutz AG ⋀KHD

0084091

5000 Köln 80, den 04. November 1982
Unser Zeichen: D 81/51 AE-ZPB P/Bn/Bi

## Brennkraftmaschine mit einem Abgasturbolader

Die Erfindung bezieht sich auf eine Vorrichtung der im Oberbegriff des ersten Anspruchs angegegebenen Art.

Eine derartige Brennkraftmaschine ist bereits aus der DE-OS 24 27 682 bekannt. Der Nachteil dieser Anordnung besteht darin, daß zum Betreiben der beiden Abgasturbinen neben der Brennkraftmaschine eine zusätzliche Brennkammer vorgesehen ist, die einzig und allein dazu dient, einen Abgasstrom zu liefern, der über ein Regelventil entweder nur der Abgasturbine zum Antrieb des Kühlgebläses oder vollständig dem Abgasstrom der Brennkraftmaschine zugeführt wird.

Aufgabe der vorliegenden Erfindung ist es, eine Brennkraftmaschine der eingangs genannten Art derart auszubilden, daß die bisher verwendete Brennkammer entfällt.

Die Lösung dieser Aufgabe wird durch die kennzeichnenden Merkmale des ersten Anspruchs erreicht. Der Vorteil dieser Anordung besteht darin, daß zum einen eine zusätzliche Brennkammer nicht notwendig ist und zum anderen der Abgasstrom der Brennkraftmaschine optimal genutzt werden kann, da durch die Parallelschaltung der Abgasturbinen mit Regelventil eine optimale Aufteilung der Abgasströme erzielt wird. Dies macht sich insbesondere bei Brennkraftmaschinen mit

großem Betriebsdrehzahlbereich, also hauptsächlich bei Fahrzeugmotoren, vorteilhaft bemerkbar, da hierbei die Abgasturbolader im oberen Drehzahl- und Lastbereich eine Überversorgung mit Ladeluft aufweisen, so daß die überschüssige Abgasmenge nicht abgeblasen werden muß, sondern der Abgasturbine zum Antrieb des Kühlgebläses zugeführt werden kann, da in diesem Arbeitsbereich ein erhöhter Kühlluftbedarf besteht. Auch ist bei einem derartigen Anwendungsfall die Anordnung der Abgasturbine zum Antrieb des Kühlgebläses beliebig, da der notwendige Abgasmengenstrom für die Abgasturbine zum Antrieb des Kühlgebläses wesentlich geringer als zum Antrieb des Verdichters - etwa im Verhältnis 1:4 bis 1:6 - ist.

Wird die erfindungsgemäße Anordnung bei Brennkraftmaschinen mit Stauaufladung verwendet, so kann das Regelventil an beliebiger Stelle im Abgasstrom vor den Turbinen, bevorzugt aber im Verzweigungspunkt der Abgasleitung zu den beiden Turbinen, angeordnet werden. Bei Brennkraftmaschinen mit Stoßaufladung wird das Regelventil bevorzugt in der Turbine des Abgasturboladers integriert.

Für Brennkraftmaschinen, die mit einem Ladeluftkühler ausgestattet sind, wird in Weiterbildung der Erfindung vorgeschlagen, eine weitere Abgasturbine zum Antrieb eines separaten Ladeluftkühlgebläses vorzusehen, wobei ein zweites Regelventil den Abgasstrom zu dieser Abgasturbine mengenmäßig steuert. Hierbei kann das Ladeluftkühlgebläse den Ladeluftkühler direkt oder aber - bei einem flüssigkeitsgekühlten Ladeluftkühler - einen Flüssigkeitsrückkühler mit Kühlluft beaufschlagen. Diese Weiterbildung wirkt sich insbesondere bei häufigem Lastwechselbetrieb der Brennkraftmaschine vorteilhaft aus, da der Kühlleistungsbedarf der Brennkraftmaschine und der Ladeluft bei derartigen Betriebszuständen unterschiedlich ist.

Da gemäß der Erfindung die Regelung der Regelventile sehr komplex sein kann, wird die Weiterbildung der Erfindung nach Anspruch 4 vorgeschlagen. Dadurch ist es möglich, z.B. bei Beschleunigungsvorgängen den gesamten Abgasstrom kurzzeitig dem Abgasturbolader zur Verfügung zu stellen bzw. die Ladeluft optimal zu kühlen. Als Meßgröße für die Regelung kann hierbei die Stellung des Fahrpedals oder bei Vorhandensein einer Einspritzpumpe mit ladedruckabhängigem Vollastanschlag dessen Stellung verwendet werden. Daneben erfolgt die Regelung der Abgasturbine des Kühlgebläses bei luftgekühlten Brennkraftmaschinen vorteilhafterweise in Abhängigkeit einer signifikanten Bauteiltemperatur oder der Abgastemperatur, bei wassergekühlten von der Kühlwassertemperatur. Das Regelventil der Abgasturbine des Ladeluftkühlgebläses wird zweckmäßigerweise noch in Abhängigkeit der Ladelufttemperatur gesteuert. Die Steuerung der Regelventile kann vorteilhaft auch elektronisch mithilfe eines Mikroprozessors erfolgen, der alle aufgezeigten Meßgrößen auswertet und somit die Abgasmengenströme entsprechend den jeweiligen Betriebszuständen der Brennkraftmaschine optimal anpaßt.

Eine weitere Ausgestaltung der Erfindung sieht vor, im Kühlflüssigkeitskreislauf der Brennkraftmaschine einen weiteren Kühler vorzusehen, der parallel oder in Reihe zu dem ersten Kühler angeordnet ist und von einem regelbaren, abschaltbaren Kühlgebläse mit Kühlluft beaufschlagt wird. Dieses zweite Kühlgebläse wird direkt z.B. über eine hydraulische Kupplung von der Brennkraftmaschine angetrieben oder ist mit einem elektrischen Antrieb versehen, um die Kühlung der Brennkraftmaschine dann sicherzustellen, wenn die Abgasenergie zur Kühlung nicht ausreicht bzw. nicht in ausreichendem Maße zur Kühlung der Brennkraftmaschine herangezogen werden kann, da sie anderweitig, z.B. zum Antrieb des Abgasturboladers, benötigt wird.

Der Kühlflüssigkeitskreislauf der Brennkraftmaschine ist gemäß einer weiteren Ausgestaltung mit einem Thermostatventil versehen, das in Abhängigkeit der Kühlflüssigkeitstemperatur den Kühlflüssigkeitsstrom durch die beiden Kühler mengenmäßig regelt. Die Regelung erfolgt dabei zweckmäßigerweise derart, daß unterhalb einer vorgebbaren Minimaltemperatur beide Kühler umgehbar sind, und erst oberhalb einer vorgebbaren Maximaltemperatur der mit dem z.B. elektrisch angetriebenen Kühlluftgebläse versehene Kühler zur Kühlung herangezogen wird, wobei bei Erreichen dieser Maximaltemperatur das Themostatventil auch gleichzeitig das Kühlluftgebläse einschaltet.

Wird die erfindungsgemäße Anordnung bei einem Fahrzeugmotor mit Retarder verwendet, so wird die Weiterbildung nach Anspruch 7 vorgeschlagen. Hierdurch wird der Vorteil erzielt, daß die Abgasturbine zum Antrieb des Kühlgebläses stärker mit Abgas beaufschlagt wird, so daß eine ausreichende Kühlluftmenge für den Retarderölkühler erzeugt wird.

Bei Verwendung der erfindungsgemäßen Anordnung in Fahrzeugen mit einer Motorbremsanlage wird die Weiterbildung nach Anspruch 8 vorteilhafterweise verwendet.

Eine Erleichterung der optimalen Auslegung der beiden Abgasturbinen kann durch die Weiterbildung der Erfindung nach Anspruch 9 erzielt werden. Durch die ungesteuerte Leitung wird die Mindestkühlung der Brennkraftmaschine aufrechterhalten.

Im folgenden wird die Erfindung an Hand bevorzugter Ausführungsbeispiele näher erläutert. Es stellen dar:

Fig. 1 eine für Fahrzeuge vorgesehene Brennkraftmaschine mit Motorbremsanlage und erfindungsgemäßer Anordnung der Abgasturbolader,

Fig. 2 eine alternative Anordnung gemäß Fig. 1 für Brennkraftmaschine mit Stoßaufladung,

Fig. 3 eine alternative Anordnung gemäß Fig. 1 mit Ladeluftkühlung.

In Fig. 1 ist schematisch die erfindungsgemäße Anordnung an einer wassergekühlten Brennkraftmaschine zum Antrieb eines Fahrzeugs dargestellt. Die Anwendung der Erfindung ist jedoch nicht darauf beschränkt.

Mit 1 ist die Brennkraftmaschine, mit 2, 3 der Abgasturbolader zum Aufladen, mit 4 eine als Stauklappe wirkende Auspuffbremse, mit 5 die Abgasturbine zum Antrieb eines Kühlgebläses, welches aus einem – nicht notwendigerweise vorhandenem – Untersetzungsgetriebe 6 und einem Ventilator 7 besteht, bezeichnet. Vor dem Ventilator 7 ist in an sich bekannter Weise ein Kühler 8 angebracht.

Durch den Verdichter 3 des Abgasturboladers wird über eine Leitung 9 vorverdichtete Verbrennungsluft zu den Brennräumen der Brennkraftmaschine 1 geliefert. Die

Abgase verlassen die Brennkraftmaschine 1 über die Abgasleitung 10. Diese teilt sich an einem Verzweigungspunkt 11 in einen Zweig 12 und 13 auf. Der Zweig 12 ist mit der Abgasturbine 2 des Abgasturboladers verbunden, der Zweig 13 führt über ein Regelventil 14 zu der Abgasturbine 5. Die beiden die Abgasturbinen 2 und 5 verlassenden Abgasleitungen vereinigen sich vor der Stauklappe 4.

Im normalen Fahrbetrieb ist die Stauklappe 4 geöffnet und das Regelventil 14 wird von einer nicht näher dargestellten Regeleinrichtung entsprechend den Erfordernissen geregelt. Im Motorbremsbetrieb wird die Stauklappe 4 geschlossen. Dadurch staut sich der Abgasstrom, wodurch die Bremswirkung der Brennkraftmaschine erhöht wird. Da auch in diesem Betriebspunkt eine gewisse Kühlung verlangt wird, kann die Abgasturbine 5 durch Öffnen des Regelventils 14 bevorzugt beaufschlagt werden.

In Fig. 2 sind nur noch die Abgasturbinen 2 und 5 mit der Abgasleitung 10 bzw. dem Abgaszweig 13' dargestellt. Das Regelventil 14' ist hierbei in der Abgasturbine 2 integriert, wodurch der Zweig 13' auch direkt von dem Regelventil 14' zu der Abgasturbine 5 führt. Eine derartige Anordnung eignet sich für Brennkraftmaschinen mit Stoßaufladung.

Im Gegensatz zu Fig. 1 ist im Abgasstrom hinter der Abgasturbine 2 ein weiteres Regelventil 15 vorgesehen. Durch Schließen dieses Regelventils 15 wird der Abgasstrom durch die Abgasturbine 2 unterdrückt, so daß der gesamte Abgasstrom durch die Abgasturbine 5 zum Antrieb des Kühlgebläses strömt. Dadurch wird eine über das übliche Maß wesentlich erhöhte Kühlleistung erzielt, so daß sich eine derartige Anordnung besonders zum Retarderbetrieb, wo keine Aufladung der Brennkraftmaschine, aber eine zusätzliche Kühlleistung zum Kühlen des Retarderöls gefordert wird, eignet.

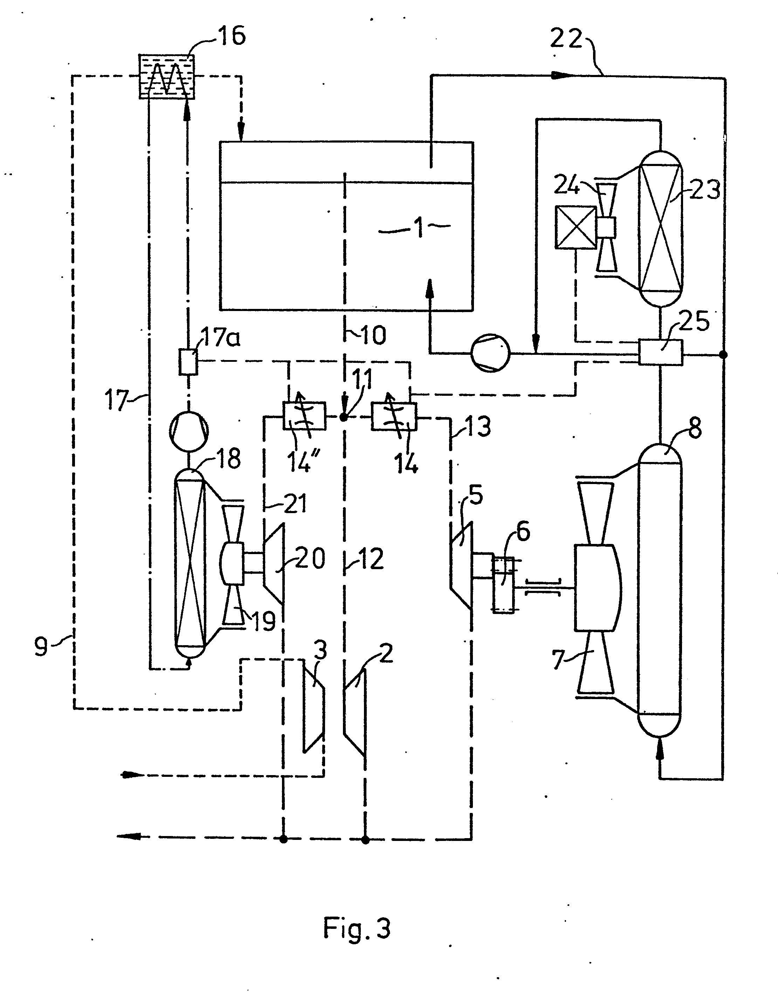

Im Ausführungsbeispiel der Erfindung nach Fig. 3 ist zusätzlich zum Ausführungsbeispiel nach Fig. 1 ein Ladeluftkühler 16 vorgesehen, der mit einem Kühlflüssigkeitskreislauf 17 verbunden ist. Dieser Kühlflüssigkeitskreislauf 17 weist einen Flüssigkeitsrückkühler 18 auf, der von einem Ladeluftkühlgebläse 19 mit Kühlluft beaufschlagt wird. Das Ladeluftkühlgebläse 19 wird ebenfalls von einer Abgasturbine 20 angetrieben, die parallel zu den Abgasturbinen 2, 5 angeordnet und mittels einer Leitung 21 mit der Abgasleitung 10 der Brennkraftmaschine 1 verbunden ist. Die Leitung 21 ist mit einem Regelventil 14" versehen, das den Abgasstrom der Abgasturbine 20 mengenmäßig steuert, wobei die Regelventile 14" und 14 mit dem Thermostaten 17a des Kühlflüssigkeitskreislaufs 17 des Ladeluftkühlers 16 verbunden sind, so daß die Steuerung der Regelventile 14"und 14 z.B. mittels eines Mikroprozessors auch in Abhängigkeit der Ladelufttemperatur erfolgen kann. Ferner ist in diesem Ausführungsbeispiel im Kühlflüssigkeitskreiskreislauf 22 der Brennkraftmaschine 1 ein zweiter Kühler 23 vorgesehen, der von einem elektrisch angetriebenen Kühlgebläse 24 mit Kühlluft beaufschlagt wird. Ein Thermostatventil 25 regelt den Strömungsverlauf der Kühlflüssigkeit, wobei in der Warmlaufphase der Brennkraftmaschine beide Kühler 8, 23 umgehbar sind.

Klöckner-Humboldt-Deutz AG △KHD                    0084091

5000 Köln 80, den 04. November 1982
Unser Zeichen: D 81/51 AE-ZPB P/Bn/Bi

P a t e n t a n s p r ü c h e

1.    Brennkraftmaschine mit einem Abgasturbolader,
vorzugsweise mit Ladeluftkühlung, deren Kühlgebläse
von einer weiteren Abgasturbine angetrieben wird, wobei beide Abgasturbinen eine gemeinsame Verbindungsdung aufweisen, in der ein Regelventil vorgesehen ist,
dadurch gekennzeichnet, daß beide Abgasturbinen (2,
5) parallel zueinander in dem Abgasstrom der Brennkraftmaschine (1) angeordnet sind und daß das Regelventil (14, 14') zur Mengenregelung der Abgasströme
dient.

2.    Brennkraftmaschine nach Anspruch 1, dadurch
gekennzeichnet, daß in dem Abgasstrom im Verzweigungspunkt (11) zu den Abgasturbinen (2, 5) das Regelventil (14') angeordnet ist.

3.    Brennkraftmaschine nach Anspruch 1 oder 2, dadurch gekennzeichnet, daß im Abgasstrom der Brennkraftmaschine (1) eine weitere Abgasturbine (20) zum
Antrieb eines separaten Ladeluftkühlgebläses (19) parallel zu den Abgasturbinen (2, 5) angeordnet ist,
wobei ein Regelventil (14") den Abgasstrom zur Abgasturbine (20) mengenmäßig regelt.

0084091

04.11.1982
D 81/51

4.    Brennkraftmaschine nach einem der Ansprüche 1 bis 3, dadurch gekennzeichnet, daß die Regelventile (14, 14', 14") elektrisch, hydraulisch oder pneumatisch in Abhängigkeit der Stellung des Fahrpedals der Brennkraftmaschine (1) und/oder des Ladedruckes bzw. der Ladelufttemperatur sowie in Abhängigkeit einer Bauteil- oder Kühlwassertemperatur steuerbar sind.

5.    Brennkraftmaschine nach einem der vorangehenden Ansprüche, dadurch gekennzeichnet, daß im Kühlflüssigkeitskreislauf der Brennkraftmaschine (1) ein weiterer Kühler (23) parallel oder in Reihe zum Kühler (8) angeordnet ist, der von einem regelbaren, abschaltbaren Kühlluftgebläse (24) mit Kühlluft beaufschlagbar ist.

6.    Brennkraftmaschine nach einem der vorangehenden Ansprüche, dadurch gekennzeichnet, daß im Kühlflüssigkeitskreislauf (22) der Brennkraftmaschine (1) ein Thermostatventil (25) vorgesehen ist, das in Abhängigkeit der Kühlflüssigkeitstemperatur den Kühlflüssigkeitsstrom durch die Kühler (8, 23) mengenmäßig regelt.

7.    Brennkraftmaschine nach einem der vorangehenden Ansprüche, dadurch gekennzeichnet, daß die Brennkraftmaschine (1) in an sich bekannter Weise mit einem Retarder ausgerüstet ist, dessen anfallende Wärme in an sich bekannter Weise in einem von dem Kühlgebläse (7) beaufschlagten Kühler rückkühlbar ist, daß in der Abgasauslaßleitung hinter den Abgasturbinen (2) eine Stauklappe (15) angeordnet ist, die im Retarderbetrieb gegensinnig zum Regelventil (14') steuerbar ist.

8.      Brennkraftmaschine nach einem der vorangehenden Ansprüche, dadurch gekennzeichnet, daß die Abgasauslaßleitung aus der Abgasturbine (5) in die Abgasauslaßleitung der Abgasturbine (2) zwischen dieser und der Stauklappe (4) mündet, wobei im Auspuffbremsbetrieb das Regelventil (14) voll geöffnet ist.

9.      Brennkraftmaschine nach einem der vorangehenden Ansprüche, dadurch gekennzeichnet, daß die Zuleitung (13) zur Abgasturbine (5) aus zwei parallelen Leitungen besteht, wobei das Regelventil (14, 14') nur in einer Leitung eingebaut ist.

Fig. 1

Fig. 2

Fig. 3

0084091

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 918 787 (SCHELP) * Spalte 2, Zeile 16 - Spalte 4, Zeile 37; Figur 1 * | 1,2 | F 02 B 37/00 |
| A | DE-A-2 912 950 (ESSERS) * Seite 5, Zeile 24 - Seite 7, Zeile 20; Figuren 1-4 * | 1,2 | |
| D,A | DE-A-2 427 682 (DINGER) | | |

RECHERCHIERTE
SACHGEBIETE (Int. Cl. ³)

F 02 B

Der vorliegende Recherchenbericht wurde für alle Patentansprüche erstellt.

| Recherchenort DEN HAAG | Abschlußdatum der Recherche 01-03-1983 | Prüfer SCHMID R. |
|---|---|---|